# EUROPÄISCHE PATENTSCHRIFT

(11) **EP 2 708 664 B1**
(45) Veröffentlichungstag und Bekanntmachung des Hinweises auf die Patenterteilung: **15.02.2023**
(21) Anmeldenummer: 13182057.3
(22) Anmeldetag: 28.08.2013
(51) Int. Cl.: F16L 37/084, F16L 37/32, E03C 1/04

(54) **Auslaufarmatur umfassend einen als Tischkaraffe ausgebildeten Auslaufkörper**
Drain fitting comprising a drain body having the shape of a carafe
Armature d'écoulement comprenant un corps d'écoulement ayant la forme d'une carafe

(30) Priorität: 14.09.2012 DE 102012216428
(43) Veröffentlichungstag der Anmeldung: 19.03.2014
(73) Patentinhaber: Hansgrohe SE, 77761 Schiltach (DE)
(72) Erfinder: Armbruster, Stefan, 77756 Hausach (DE); Blattner, Joachim, 77716 Haslach (DE); Kinle, Ulrich, 77773 Schenkenzell (DE); Moosmann, Hubert, 77761 Schiltach (DE)
(74) Vertreter: Patentanwälte Ruff, Wilhelm, Beier, Dauster & Partner mbB

(56) Entgegenhaltungen:
- WO-A1-2006/084448
- WO-A1-2007/124931
- DE-A1-102007 040 495
- DE-U1-202004 006 464
- JP-A- H0 978 641
- KR-A- 20110 124 879
- US-A- 1 417 583

## Beschreibung

Die Erfindung bezieht sich auf eine sanitäre Waschtisch- oder Spültisch-Auslaufarmatur nach dem Oberbegriff des Anspruchs 1. Diese dient zum Abgeben einer zugeführten Flüssigkeit und beinhaltet einen Grundkörper, der einen Anschluss zum Anschließen an eine Flüssigkeitsversorgung aufweist, und einen damit verbundenen Auslaufkörper.

Auslaufarmaturen mit Grundkörper und damit verbundenem Auslaufkörper sind insbesondere in der Sanitärtechnik allgemein gebräuchlich, um Kalt- und/oder Warmwasser, das von einer zugehörigen Wasserversorgung zugeführt wird, an Waschtischen, Spültischen etc. bereitzustellen. Der Grundkörper beinhaltet typischerweise Befestigungsmittel zum Befestigen am gewünschten Einsatzort, wie an einem Wasch- oder Spültisch, und Mittel zur Steuerung der Wasserzufuhr, wie ein als Zweigriffmischer, Einhebelmischer oder Thermostat ausgeführtes Misch- und Absperrventil.

Herkömmlicherweise schließt der Auslaufkörper meist einteilig an den Grundkörper an und bildet einen rohrförmigen Auslaufstutzen. Insbesondere bei Spültischarmaturen ist es auch bekannt, einen äußeren Gehäuseteil des Auslaufkörpers mittels einer Steckverbindung lösbar am Grundkörper anbringen und abnehmen zu können, wobei der Auslaufkörper durch ein aus dem Grundkörper herausziehbares Schlauchteil mit dem Grundkörper verbunden bleibt. Der Auslaufkörper kann dadurch mit seiner Ausmündung praktisch den gesamten Spültischbereich direkt erreichen.

Wenn die von der Auslaufarmatur abgegebene Flüssigkeit temporär bevorratet werden soll, um sie an einen entfernten Einsatzort transportieren zu können, ist dafür herkömmlicherweise ein entsprechender Behälter wie ein Becher, ein Krug, eine Karaffe etc., erforderlich, der an der Auslaufarmatur mit der Flüssigkeit gefüllt wird, indem er unter die Ausmündung des Auslaufkörpers gehalten wird. Beispiele sind im Haushalt der Wassertransport zu Kochtöpfen, Kaffeemaschinen etc. und das Befüllen von Karaffen für Frischwasser zum Trinken.

Die Offenlegungsschrift JP 09-078641 A offenbart eine Vorrichtung zur Speicherung von Frischwasser für Notfälle in einem Kanister. Dazu ist ein Wasserhahn vorgesehen, der zusätzlich zu einem normalen Auslauf einen über eine erste Schlauchleitung mit einem Einlass des Kanisters verbundenen Auslauf sowie einen über eine weitere Schlauchleitung mit einem Auslass des Kanisters verbundenen Einlass aufweist. Der Einlass und der Auslass des Kanisters sind in einer Deckeleinheit integriert, die auf eine zugehörige Öffnung im oberen Bereich des Kanisters aufgesetzt ist. In einem unteren Bereich weist der Kanister eine Ausnehmung auf, an der ein Auslasshahn an eine Auslassöffnung des Kanisters angeschlossen ist.

Die Offenlegungsschrift WO 2006/084448 A1 offenbart eine Sanitärarmatur mit einem Grundkörper, der einen Wasserzulauf und eine Ventileinheit umfasst, sowie mit einem Wasserauslauf, der ein Verbindungsglied umfasst, welches an seinem einen Ende über ein Einlaufteil, durch das bei geöffneter Ventileinheit das durch den Wasserzulauf strömende Wasser in den Wasserauslauf eintritt, fest mit dem Grundkörper verbunden ist und welches an seinem anderen Ende einen Auslaufkopf trägt, durch den das in den Wasserzulauf eintretende Wasser aus der Sanitärarmatur wieder abläuft. Zwischen dem Einlaufteil und dem Auslaufkopf ist eine auswechselbare Einheit lösbar mit dem Verbindungsglied verbunden, die wasserdicht am Einlaufteil einerseits und am Auslaufkopf andererseits anliegt und durch die das aus dem Einlaufteil austretende Wasser vollständig in den Auslaufkopf geleitet wird.

Die Offenlegungsschrift WO 2007/124931 A1 offenbart eine Vorrichtung zum automatischen Steuern der Freigabe und Unterbrechung mindestens einer zu einem Wasserhahn führenden Zulaufleitung, wenn der Wasserhahn an einer Trägerbasis montiert oder von dieser demontiert wird, die Unterbrechungsventile enthält. Dazu beinhaltet die Vorrichtung einen Adapter mit Mitteln für die Kopplung desselben mit einer hydraulischen Mischkartusche, Mitteln zum Herstellen von Wasserdichtigkeit zu einem Hohlraum eines Wasserhahnkörpers und mit mindestens einem Schieber, der aus einem den Mitteln der Kopplung mit der Kartusche abgewandten Teil hervorragt, der in einer Position angeordnet ist, welcher der Zulaufleitung der Trägerbasis entspricht. Die Zulaufleitung weist mindestens ein Unterbrechungsventil auf, das normalerweise geschlossen ist und durch die Anwendung einer Kraft seitens des Schiebers geöffnet werden kann.

Die Gebrauchsmusterschrift DE 20 2004 006 464 U1 offenbart einen Wassersparhahn für Wasserarmaturen im Haushaltsbereich, der einen Vorratsbehälter aufweist, in den eine Zuflussleitung einmündet und der in einem oberen Bereich eine Öffnung für einen normalen Wasseraustritt und in einem unteren Bereich eine Öffnung für einen zweiten Wasseraustritt aufweist, der als ein Wassersparaustritt ausgebildet ist.

Die Offenlegungsschrift DE 10 2007 040 495 A1 offenbart eine Sanitärarmatur mit einem Gehäuse, einem an diesem angeformten oder mit diesem verbundenen oder verbindbaren Auslauf sowie Funktionsteilen zur Wasserführung, die vorzugsweise innerhalb des Gehäuses angeordnet sind. Der Auslauf ist im Wesentlichen frei von wasserführenden Funktionsteilen ausgebildet, und zumindest der Auslauf und vorzugsweise auch das Gehäuse sind im Wesentlichen vollständig aus Glas gefertigt.

Die Offenlegungsschrift KR 10-2011-0124879 offenbart einen Messbecher für Küchenzwecke, der über eine Gummidichtung an einen Wasserhahn angeschlossen werden kann.

Die Patentschrift US 1,417,583 offenbart eine sanitäre Waschtisch- oder Spültisch-Auslaufarmatur zum Abgeben einer zugeführten Flüssigkeit nach dem Oberbegriff des Anspruchs 1 mit einem becherförmigen Auslaufkörper, der Befestigungsmittel zum Befestigen an einem Waschtisch oder Spültisch aufweist und mit Bediengriffen von Absperrventilen für Kaltwasser bzw. Warmwasser versehen ist. Die Bediengriffe sind über Bedienstangen mit zugehörigen Ventilen gekoppelt, die in einer unterhalb des Waschtischs vorgesehenen und mit dem becherförmigen Auslaufkörper verschraubten Anschlussarmatur untergebracht sind.

Der Erfindung liegt als technisches Problem die Bereitstellung einer sanitären Waschtisch- oder Spültisch-Auslaufarmatur mit gegenüber den oben erwähnten herkömmlichen Auslaufarmaturen verbesserter Funktionalität zugrunde.

Die Erfindung löst dieses Problem durch die Bereitstellung einer sanitären Waschtisch- oder Spültisch-Auslaufarmatur mit den Merkmalen des Anspruchs 1.

Bei der erfindungsgemäßen Auslaufarmatur ist der Auslaufkörper als Flüssigkeitstransportbehälter ausgebildet, d.h. er weist eine Flüssigkeitsaufnahmekammer auf, aus der eine Ausmündung zur Flüssigkeitsabgabe abführt. Der Flüssigkeitstransportbehälter wird vorliegend auch kurz Flüssigkeitsbehälter genannt. Weiter ist erfindungsgemäß vorgesehen, dass der Auslaufkörper vom Grundkörper abgenommen werden kann, d.h. Grundkörper und Auslaufkörper sind über eine lösbare Verbindung miteinander gekoppelt, so dass der Auslaufkörper vom Grundkörper abgenommen und wieder angebracht werden kann. Der Grundkörper wird mittels entsprechender Befestigungsmittel an einem Waschtisch oder Spültisch befestigt.

Wenn der Grundkörper an die Flüssigkeitsversorgung angeschlossen ist und der Auslaufkörper am Grundkörper angebracht ist, besteht eine Fluidverbindung zur Flüssigkeitszufuhr von einer Flüssigkeitsversorgung zum Auslaufkörper, speziell zu deren Flüssigkeitsaufnahmekammer. Bei der erfindungsgemäßen Auslaufarmatur bildet der Auslaufkörper somit einen Flüssigkeitsbehälter, der am Ort des Grundkörpers mit Flüssigkeit von der Flüssigkeitsversorgung befüllt und dann durch Abnehmen vom Grundkörper an einen gewünschten Verwendungsort gebracht werden kann. Die erfindungsgemäße Auslaufarmatur macht so einen zusätzlichen Behälter zum Flüssigkeitstransport überflüssig.

Erfindungsgemäß ist die lösbare Verbindung von Grundkörper und Auslaufkörper als Steckverbindung ausgeführt, durch welche der Auslaufkörper an den Grundkörper angekoppelt und wieder von diesem gelöst werden kann.

Erfindungsgemäß sind zugehörige Steckverbindungsmittel an einer Unterseite des Auslaufkörpers und an einer oberen Stirnseite des Grundkörpers vorgesehen. Dadurch kann der Auslaufkörper mit seiner Unterseite oben auf den Grundkörper aufgesetzt werden.

In einer Weiterbildung der Erfindung ist ein Verriegelungsmittel vorgesehen, mit dem die Steckverbindung des Auslaufkörpers am Grundkörper lösbar verriegelt werden kann. Dies sichert gegen ein unbeabsichtigtes Abnehmen oder Ablösen des Auslaufkörpers vom Grundkörper.

In einer Weiterbildung der Erfindung umfasst die Fluidverbindung einen in die Flüssigkeitsaufnahmekammer des Auslaufkörpers führenden Zuflusskanal im Auslaufkörper und eine selbsttätige Abflusssperre, die den Zuflusskanal gegen ein Abfließen von Flüssigkeit aus der Flüssigkeitsaufnahmekammer absperrt, wenn der Auslaufkörper vom Grundkörper abgenommen ist. Dies verhindert, dass Flüssigkeit über den Zuflusskanal aus der Flüssigkeitsaufnahmekammer ausläuft, wenn der Auslaufkörper vom Grundkörper abgenommen wird. Andererseits gibt die Abflusssperre den Zuflusskanal zur Zufuhr von Flüssigkeit von der Flüssigkeitsversorgung in die Flüssigkeitsaufnahmekammer frei, wenn der Auslaufkörper am Grundkörper angebracht ist.

In einer Weiterbildung der Erfindung beinhaltet die Fluidverbindung zur Flüssigkeitszufuhr von der Flüssigkeitsversorgung in den Auslaufkörper ein am Grundkörper vorgesehenes, selbsttätiges Absperrventil, das in einer Freigabeposition gehalten wird, wenn der Auslaufkörper am Grundkörper angebracht ist, während es eine Absperrposition einnimmt, wenn der Auslaufkörper vom Grundkörper abgenommen ist. Letzeres verhindert, wenn sich der Auslaufkörper nicht am Grundkörper befindet, ein unerwünschtes Austreten von Flüssigkeit aus dem Grundkörper auch dann, wenn ein vorgelagertes Flüssigkeitszufuhr-Steuerelement, wie ein Mischerventil, versehentlich geöffnet wird.

In einer Weiterbildung der Erfindung weist die Fluidverbindung zur Flüssigkeitszufuhr von der Flüssigkeitsversorgung in die Flüssigkeitsaufnahmekammer des Auslaufkörpers ein Wirbelerzeugungsmittel auf, durch das Flüssigkeit unter Bildung einer zentrifugalen Wirbelströmung in die Flüssigkeitsaufnahmekammer eingeleitet wird. Dies kann zum Beispiel zur Erzielung einer entsprechend zentrifugalen Befüllcharakteristik für die Flüssigkeitsaufnahmekammer von Vorteil sein. In einer Ausgestaltung der Erfindung beinhaltet das Wirbelerzeugungsmittel einen Strömungsleitkörper, der in einem Zuflusskanal oder einem Eintrittsbereich zur Flüssigkeitsaufnahmekammer angeordnet ist. Der Strömungsleitkörper weist mindestens eine Kammereintrittsöffnung mit zu einer Kammerlängsrichtung querverlaufender Hauptkomponente und/oder einen sich in der Kammer quer zu deren Längsrichtung erstreckenden Strömungsleitflansch und/oder mindestens einen schräg zu einer Zuflusskanallängsrichtung verlaufenden Strömungsleitschlitz in einem Zuflusskanalabschnitt auf. Dies stellt konstruktiv vorteilhafte Möglichkeiten dar, die Flüssigkeit mit dem gewünschten Wirbel in die Kammer einzuleiten.

In einer Weiterbildung der Erfindung ist ein Luftansaugkanal vorgesehen, der in den Zuflusskanal im Auslaufkörper mündet. Dadurch kann mittels Sogeffekt Luft angesaugt und der in die Flüssigkeitsaufnahmekammer einzuleitenden Flüssigkeit beigemischt werden. Wenn gewünscht, kann dieser Luftansaugkanal zusätzlich als ein Abführkanal zum Abführen von Flüssigkeit aus der Flüssigkeitsaufnahmekammer ausgelegt sein, wenn der Auslaufkörper am Grundkörper angebracht ist. Damit kann vermieden werden, dass Flüssigkeit unerwünscht lange in der Flüssigkeitsaufnahmekammer stehen bleibt.

Das letztgenannte Ziel lässt sich in Weiterbildung der Erfindung auch durch einen Abführkanal erzielen, der getrennt vom Zuflusskanal aus einem Bodenbereich der Flüssigkeitsaufnahmekammer abführt und sich in den Grundkörper erstreckt, oder ein entsprechender Abführkanal geht in Weiterbildung der Erfindung vom Zuflusskanal ab, wobei ein Ventil den Abflusskanal gegenüber dem Zuflusskanal flüssigkeitsdruckgesteuert selbsttätig absperrt und freigibt. Die Abführkanäle können zum Beispiel in einen Ablauf eines zugehörigen Wasch- oder Spültischs münden.

Vorteilhafte Weiterbildungen der Erfindung sind in den Zeichnungen dargestellt und werden nachfolgend beschrieben. Hierbei zeigen:
- Fig. 1: eine Perspektivansicht einer Auslaufarmatur vom Einhebelmischertyp mit auf einem Grundkörper lösbar aufgesetztem Auslaufkörper mit zylindrischer Flüssigkeitsaufnahmekammer und rinnenförmiger Ausmündung,
- Fig. 2: eine Längsschnittansicht eines Auslaufkörpers mit gegenüber demjenigen von Fig. 1 modifiziertem Design in einer auf einen Abstellsockel aufgesetzten Position,
- Fig. 3: eine detailliertere Längsschnittansicht eines unteren Teils des Auslaufkörpers von Fig. 2,
- Fig. 4: eine Längsschnittansicht eines Grundkörpers nach Art von Fig. 1 mit aufgesetztem Auslaufkörper nach Art der Fig. 2 und 3,
- Fig. 5: eine detailliertere Längsschnittansicht einer Variante von Fig. 4 im Übergangsbereich von Grundkörper und Auslaufkörper,
- Fig. 6: eine Querschnittansicht längs einer Linie VI-VI von Fig. 5,
- Fig. 7: eine Perspektivansicht eines im Auslaufkörper der Fig. 2 bis 5 verwendeten Ventil- und Strömungsleitkörpers,
- Fig. 8: eine Längsschnittansicht des Übergangsbereichs zwischen Grundkörper und Auslaufkörper ähnlich Fig. 5 für eine weitere Auslaufarmaturvariante,
- Fig. 9: eine Längsschnittansicht des Übergangsbereichs von Grundkörper und Auslaufkörper für eine Auslaufarmaturvariante mit einem mittigen Abführkanal und
- Fig. 10: eine Längsschnittansicht eines Grundkörpers mit aufgesetztem Auslaufkörper für eine weitere Auslaufarmaturvariante.

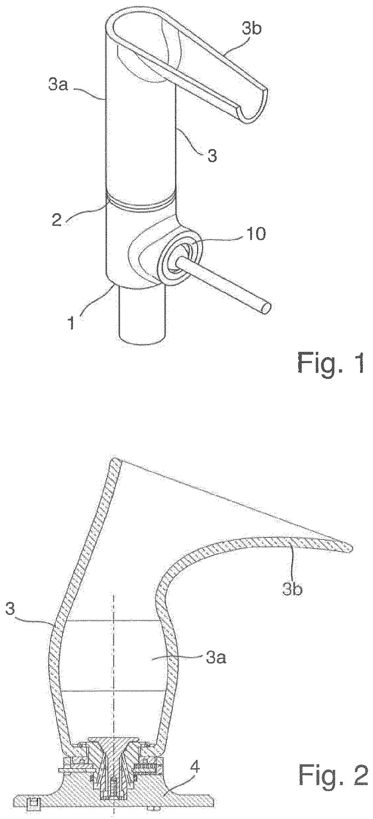

Die in Fig. 1 gezeigte Auslaufarmatur eignet sich als Wasch- oder Spültischarmatur zum Abgeben von zugeführtem Wasser über einem Wasch-oder Spültisch. Die Armatur umfasst einen Grundkörper 1, der in einer üblichen und daher hier nicht weiter gezeigten Weise einen Anschluss zum Anschließen an eine Wasserversorgung aufweist und mit einem Einhebelmischer 10 herkömmlicher Bauart versehen ist. Auf eine obere Stirnseite des zylindrischen Grundkörpers 1 ist über eine lösbare Verbindung 2 ein Auslaufkörper 3 aufgesetzt. Durch die lösbare Verbindung 2 kann der Auslaufkörper 3 vom Grundkörper 1 abgenommen und wieder aufgesetzt werden. Die lösbare Verbindung 2 umfasst zugehörige Verbindungsmittel an einer Unterseite des Auslaufkörpers 3 einerseits und der oberen Stirnseite des Grundkörpers 1 andererseits und ist als Steckverbindung realisiert.

Der Auslaufkörper 3 ist als Flüssigkeitsbehälter mit einer Flüssigkeitsaufnahmekammer 3a und einer aus dieser abführenden Ausmündung 3b zur Flüssigkeitsabgabe ausgebildet. Im gezeigten Beispiel ist die Kammer 3a fluchtend zum zylindrischen Grundkörper 1 als davon nach oben abragender Zylinder ausgebildet, aus dem in einem oberen Bereich die rinnenförmig gestaltete Ausmündung 3b mit leichter Neigung nach unten ausmündet.

Durch die Gestaltung des Auslaufkörpers 3 als ein vom Grundkörper 1 abnehmbares und die Flüssigkeitsaufnahmekammer 3a bildendes Bauteil eignet er sich als Wassertransportbehälter. Dazu wird die Kammer 3a, wenn der Auslaufkörper 3 auf den Grundkörper 1 aufgesetzt ist, durch Betätigen des Einhebelmischers 10 mit Wasser befüllt, wonach der Auslaufkörper 3 von Grundkörper 1 abgenommen wird, um das in der Kammer 3a befindliche Wasser an einen gewünschten Ort zu bringen und dort über die Ausmündung 3b nach Bedarf auszugießen.

Fig. 2 zeigt einen im Design modifizierten Auslaufkörper 3, wobei hier und im Folgenden zum leichteren Verständnis gleiche Bezugszeichen nicht nur für identische, sondern auch für funktionell äquivalente Elemente verwendet sind. Im Beispiel von Fig. 2 ist der Auslaufkörper 3 im Bereich seiner Flüssigkeitsaufnahmekammer 3a etwas bauchig erweitert und geht in seinem nach oben anschließenden Abschnitt stetig in die leicht nach unten geneigte Ausmündung 3b über, wobei der kreisrunde Querschnitt der Kammer 3a in einen ovalen Ausmündungsquerschnitt übergeht.

In Beispiel von Fig. 2 ist der Auslaufkörper 3 auf einen Abstellsockel 4 lösbar aufgesetzt, mit dem er auf einer ebenen Fläche, wie einem Tisch, abgestellt werden kann, wenn er vom Grundkörper abgenommen wurde. So kann der Auslaufkörper 3 zum Beispiel als Tischkaraffe verwendet werden. Der Auslaufkörper 3 ist hierbei mit dem Abstellsockel 4 über eine lösbare Verbindung 2 verbunden, die derjenigen von Grundkörper 1 und Auslaufkörper 3 entspricht, auf die nachstehend eingegangen wird.

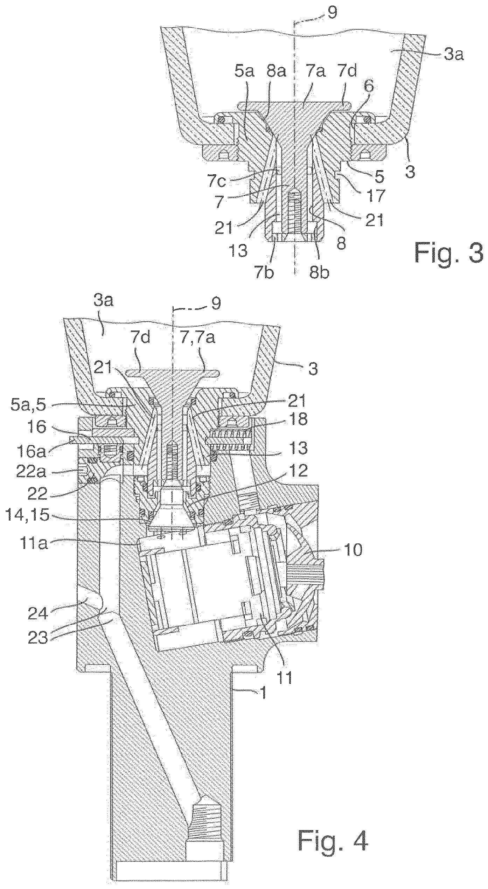

Fig. 3 zeigt eine beispielhafte Gestaltung eines Anschlussbereichs 5, über den der Auslaufkörper 3 mit dem zugehörigen Grundkörper beziehungsweise optional mit einem Abstellsockel entsprechend Fig. 2 mechanisch lösbar gekoppelt werden kann und der somit die auslaufkörperseitigen Verbindungsmittel bereitstellt. Darüber hinaus weist der Anschlussbereich 5 auch die erforderlichen auslaufkörperseitigen Mittel zur Bereitstellung der benötigten Fluidverbindung zwischen Auslaufkörper 3 und Grundkörper 1 auf.

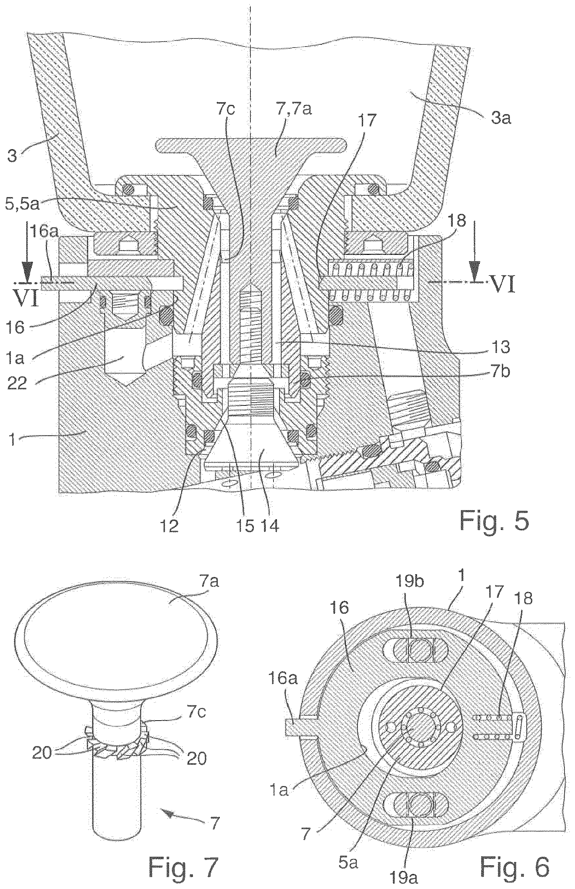

Fig. 4 zeigt im Längsschnitt beispielhaft eine Realisierung für den Grundkörper 1 mit dem Einhebelmischer 10 gemäß Fig. 1 und den aufgesetzten, nur mit seinem unteren Teil dargestellten Auslaufkörper 3. Fig. 5 zeigt in einer vergrößerten Darstellung den Verbindungs- bzw. Kopplungsbereich zwischen Grundkörper 1 und Auslaufkörper 3.

Wie aus Fig. 3 zu erkennen, beinhaltet der Anschlussbereich 5 einen im Wesentlichen zylindrischen Anschlussblockkörper 5a, der in eine Bodenöffnung 6 des Auslaufkörpers 3 fluiddicht eingesetzt ist und eine Mittenbohrung 8 aufweist, in der ein Ventilkörper 7 angeordnet ist. Der Ventilkörper 7 ist mit zu einer Längsachse 9 des Auslaufkörpers 3 identischer Längsachse positioniert und in einem Kopfbereich 7a kegelförmig erweitert und korrespondiert dort mit einer als Ventilsitz fungierenden, konischen Erweiterung 8a der Mittenbohrung 8. In einem Fußbereich ist in den Ventilkörper 7 ein Fußteil 7b eingeschraubt, das hubbegrenzend in einer unteren Erweiterung 8b der Mittenbohrung 8 geführt ist.

Im vom Grundkörper 1 abgenommenen Zustand des Auslaufkörpers 3 nimmt der Ventilkörper 7 aufgrund Schwerkraft und des Drucks von gegebenenfalls in der Flüssigkeitsaufnahmekammer 3a befindlicher Flüssigkeit seine in Fig. 3 gezeigte, abdichtende untere Endstellung ein. Aus dieser wird er bei Aufsetzen des Auslaufkörpers 3 auf den Grundkörper 1 in seine obere, freigebende Stellung hochgedrückt, wie in den Fig. 4 und 5 gezeigt. Dadurch ist die Fluidverbindung zur Flüssigkeitszufuhr von der Flüssigkeitsversorgung in die Flüssigkeitsaufnahmekammer 3a freigegeben, wenn der Grundkörper 1 an seine Flüssigkeitsversorgung angeschlossen ist. Durch Betätigen des Mischers 10 kann die Flüssigkeitsaufnahmekammer 3a mit Wasser gefüllt werden. Im gezeigten Beispiel der Fig. 4 und 5 gelangt hierbei Wasser von der Versorgung in eine Kartuschenkammer 11a einer Kartusche 11 des Mischers 10 und von dort durch einen ringförmigen Ventilkanal 12 eines im Grundkörper 1 angeordneten Absperrventils in einen Zuflusskanal 13, der im Bereich des Auslaufkörpers 3, speziell in dessen Anschlussbereich 5, durch einen Ringspalt gebildet ist, welcher vom Ventilkörper 7 in der Mittenbohrung 8 des Anschlussblockkörpers 5a belassen wird. Der Ventilkörper 7 bildet eine selbsttätige Abflusssperre für den Zuflusskanal 13, indem er ihn bei am Grundkörper 1 angebrachtem Auslaufkörper 3 zur Zufuhr von Flüssigkeit in die Flüssigkeitsaufnahmekammer 3a freigibt, wie in den Fig. 4 und 5 dargestellt, und ihn bei vom Grundkörper 1 abgenommenem Auslaufkörper 3 gegen ein Rückfließen von Flüssigkeit aus der Flüssigkeitsaufnahmekammer 3a absperrt, wie in Fig. 3 dargestellt.

Das im Grundkörper angeordnete Absperrventil beinhaltet einen Ventilkegel 14 und einen korrespondierenden Ventilsitz 15. Der Ventilkegel 14 ist mit zur Längsachse 9 des Auslaufkörpers 3 identischer Längsachse entlang dieser mit einem vorgebbaren Ventilhub beweglich angeordnet. In der Position mit auf dem Grundkörper 1 aufgesetztem Auslaufkörper 3 drücken sich die beiden Ventilkörper 7, 14 in ihre jeweilige Freigabeposition, dass heißt der Auslaufkörper-Ventilkörper 7 befindet sich in seiner oberen Endstellung und der Grundkörper-Ventilkegel 14 in einer unteren Endstellung. Wenn der Auslaufkörper 3 vom Grundkörper 1 abgenommen wird und die Flüssigkeitszufuhr über den Mischer 10 versehentlich noch nicht geschlossen wurde oder später versehentlich geöffnet wird, drückt der in der Kartuschenkammer 11a anstehende Wasserdruck den Ventilkegel 14 nach oben auf seinen Ventilsitz 15 und schließt den Ventilkanal 12. Der Ventilkegel 14 bildet folglich mit seinem Ventilsitz 15 ein selbsttätiges Absperrventil, das bei vom Grundkörper 1 abgenommenem Auslaufkörper und anstehendem Wasserdruck eine Absperrposition einnimmt, durch die verhindert wird, dass versehentlich beim Aktivieren des Mischers 10 Wasser aus dem Grundkörper 1 austritt.

Im gezeigten Beispiel ist die Verbindung von Grundkörper 1 und Auslaufkörper 3 als lösbare Steckverbindung ausgebildet, wobei der Anschlussblockkörper 5a des Auslaufkörpers 3 in eine korrespondiere Vertiefung bzw. Aufnahme 1a an der oberen Stirnseite des Grundkörpers 1 einsetzbar ist. Das Aufstecken und das gesteckte Halten des Auslaufkörpers 3 am Grundkörper 1 wird durch ein Verriegelungsmittel gesichert, mit dem die Steckverbindung lösbar verriegelt wird. Wie aus den Fig. 4 bis 6 zu erkennen, beinhaltet das Verriegelungsmittel einen Rastring 16, der in einer Querebene liegend und in einer Querrichtung mit vorgebbaren Rasthub beweglich im Grundkörper 1 angeordnet ist, und eine damit korrespondierende Rastnut 17 am Außenumfang des Anschlussblockkörpers 5a des Auslaufkörpers 3. In Querbewegungsrichtung ist der Rastring 16 auf einer Seite mit einer Betätigungsnase 16a versehen, die sich durch eine korrespondierende Öffnung des Grundkörpers 1 hindurch erstreckt und etwas aus dem Grundkörper 1 heraussteht. Mittels einer gegenüberliegend angeordneten Druckfeder 18, die sich am Grundkörper 1 abstützt, wird der Rastring 16 in seiner in Fig. 6 gezeigten Verriegelungsstellung gehalten, in welcher er über einen gewissen Umfangswinkel hinweg mit einem Innenrand in die Rastnut 17 des Anschlussblockkörpers 5a des Auslaufkörpers 3 eingreift. Zum Entriegeln der Steckverbindung drückt ein Benutzer den Rastring 16 an seiner aus dem Grundkörper 1 vorstehenden Nase 16a gegen die Vorspannfeder 18 aus der Rastnut 17 heraus, woraufhin der Auslaufkörper 3 vom Grundkörper 1 nach oben abgenommen werden kann. Die Bewegung des Rastrings 16 wird durch zwei gegenüberliegende Paare 19a, 19b von am Rastring 16 ausgebildeten Langlochschlitzen und am Grundkörper 1 ausgebildeten, in die Langlochschlitze eingreifenden Führungszapfen geführt.

Beim Befüllen des nach oben offenen Auslaufbehälters 3 ist darauf zu achten, dass das Wasser so in die Kammer 3a eingeleitet wird, dass es auch bei maximal geöffnetem Mischer 10 nicht nach oben herausspritzt. Eine Möglichkeit, die auch noch weitere Vorteile haben kann, besteht darin, das Wasser in einer zentrifugalen Wirbelströmung in die Kammer 3a einzuleiten. Dazu weist die wasserzuführende Fluidverbindung ein geeignetes Wirbelerzeugungsmittel auf. Im gezeigten Beispiel der Fig. 3 bis 7 ist dieses Wirbelerzeugungsmittel durch entsprechende konstruktive Gestaltung des Ventilkörpers 7 realisiert. Dazu ist der Ventilkörper 7 in einem axial etwa mittigen Abschnitt mit einem Ringbund 7c ausgebildet, in den schräg mit axialer Komponente und Umfangskomponente verlaufende Kanalschlitze 20 eingebracht sind. Im Zuflusskanal 13 von unten axial einströmendes Wasser wird durch die schräg verlaufenden Kanalschlitze 20 in eine schraubenförmige Wirbelbewegung versetzt. Der Kopfteil 7a des Ventilkörpers 7 ist mit einem radialen Abschlussringflansch 7b versehen, gegen den das in die schraubenförmige Wirbelbewegung versetzte Wasser von unten anströmt, wenn es aus dem Zuflusskanal 13 in die Flüssigkeitsaufnahmekammer 3a eintritt. Dadurch wird seine axiale Strömungskomponente weiter in eine Querbewegung umgelenkt, so dass das Wasser bei entsprechendem Wasserdruck als zentrifugaler Wirbel im Wesentlichen in einer Querebene in die Flüssigkeitsaufnahmekammer 3a einströmt und selbige von unten her füllt, ohne vorzeitig nach oben aus der Kammer 3a herauszuspritzen. Gleichzeitig kann diese wirbelförmige Wassereinströmung in die Kammer 3a einen optischen Effekt erfüllen, insbesondere wenn die Wand des Auslaufkörpers 3 aus Glas oder einem anderen transparenten Material gefertigt ist.

Die Wirbelsichtbarkeit kann weiter dadurch gesteigert werden, dass dem in die Kammer 3a eingeleiteten Wasser angesaugte Luft beigemischt wird, wobei diese Maßnahme wiederum je nach Fall weitere Vorteile haben kann. Das Ausführungsbeispiel der Fig. 3 bis 7 ist für eine derartige Luftansaugung und Luftbeimischung eingerichtet. Dazu weist der Anschlussblockkörper 5a des Auslaufkörpers 3 Luftansaugbohrungen 21 auf, die zum Einen in den Zuflusskanal 13 im Bereich des Ventilsitzes 8a des Ventilkörpers 7 und zum Anderen in einen im Grundkörper 1 vorgesehenen Luftansaugkanal 22 münden, der seinerseits an einer umfangsseitigen Luftansaugöffnung 22a des Grundkörpers 1 ausmündet. Wenn das Wasser zum Befüllen der Flüssigkeitsaufnahmekammer 3a im Zuflusskanal 13 nach oben strömt, wird Luft mittels Sogwirkung über die Luftansaugkanäle 21, 22 angesaugt und vom Wasser mitgerissen beziehungsweise diesem beigemischt. Aufgrund der Druckverhältnisse verhindert der Venturi-Effekt, dass Wasser in die Luftansaugkanäle 21, 22 gelangt.

Solange der Auslaufkörper 3 auf dem Grundkörper 1 aufgesteckt bleibt, kann er in üblicher Weise als Wasserauslauf der Armatur fungieren. Wenn die Wasserzufuhr gestoppt wird, bleibt das Wasser in der Flüssigkeitsaufnahmekammer 3a zunächst stehen. In vielen Fällen kann es wünschenswert sein, dass dieses Wasser nicht zu lange steht, sondern langsam abläuft. Im gezeigten Beispiel kann dies nach Schließen des Mischers 10 dadurch bewirkt werden, dass das Wasser aus der Kammer 3a über die Luftansaugkanäle 21, 22 abgeführt wird. Von dort kann es in ein Becken des Wasch-/Spültischs gelangen oder direkt in einen zugeordneten Wasch-/Spültischablauf abgeleitet werden. Letzteres ist am Beispiel von Fig. 4 in Form einer Drainagebohrung 23 des Grundkörpers 1 gezeigt, die vom Luftansaugkanal 22 zu einem üblichen, hier nicht gezeigten Wasch- oder Spültischablauf führt. Eine vom Drainagekanal 23 am Grundkörperumfang ausmündende Querbohrung 24 ermöglicht, dass evtl. im Drainagekanal 23 hochgedrücktes Schmutzwasser dort aus dem Grundkörper 1 wieder herausgelangen und in das Wasch-/Spülbecken zurückgelangen kann. Gleichzeitig kann die Querbohrung 24 als weitere Luftansaugbohrung fungieren.

Im gezeigten Beispiel sind der Anschlussblockkörper 5a und der zugehörige Aufnahmeraum im Grundkörper 1 zylindrisch ausgebildet, so dass der Auslaufkörper 3 in beliebiger Drehstellung auf den Grundkörper 1 aufgesteckt werden kann und in seiner aufgesteckten Position gegenüber dem Grundkörper 1 auch frei gedreht werden kann. Optional kann zudem vorgesehen sein, dass der Anschlussblockkörper 5a gegenüber dem restlichen Auslaufkörper 3 verdrehbar ist und die Gehäusewand der Kammer 3a mindestens in einer bestimmten Drehstellung vom Anschlussblockkörper 5a gelöst werden kann, z.B. für Reinigungszwecke. Dabei kann der Anschlussblockkörper 5a in seiner verriegelten Steckverbindung am Grundkörper 1 verbleiben.

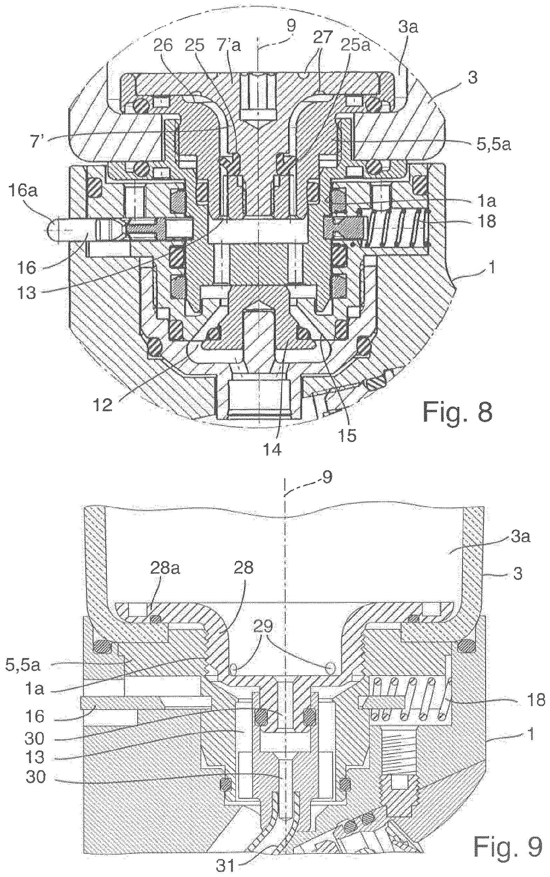

Fig. 8 veranschaulicht eine Variante der Auslaufarmatur der Fig. 2 bis 7, wobei für funktionell äquivalente Elemente gleiche Bezugszeichen verwendet sind und insoweit auf die obigen Ausführungen zum Ausführungsbeispiel der Fig. 2 bis 7 verwiesen werden kann. Die Variante von Fig. 8 unterscheidet sich vom Beispiel der Fig. 2 bis 7 vor allem in der Verwendung eines modifizierten Ventilkörpers 7' für den Zuflusskanal 13. Als Abflußsperre fungiert hier eine in eine Ringnut des Ventilkörpers 7' eingelegte Gummimanschette 25, an der eine bewegliche Dichtringlippe 25a in radialer und axialer Richtung derart abkragend angeformt ist, dass die Dichtlippe 25a einem Wasserdruck von unten nachgibt und sich unter Freigabe des Zuflusskanals 13 an die Manschette anlegt bzw. in die Ringnut des Ventilkörpers 7' gedrückt wird, während sie sich bei entgegengesetztem Wasserdruck von oben aufspreizt und den Zuflusskanal 13 dicht absperrt. Somit wirkt die Gummimanschette 25 als Rückschlagventil, das die Wasserzufuhr in die Flüssigkeitsaufnahmekammer 3a des Auslaufkörpers 3 freigibt, während sie ein Auslaufen der Kammer 3a über den Zuflusskanal 13 verhindert, insbesondere wenn der Auslaufkörper 3 vom Grundkörper 1 abgenommen wird.

Des Weiteren weist die Auslaufarmatur von Fig. 8 ein modifiziertes Wirbelerzeugungsmittel auf, um auch hier wieder das Wasser in einem zentrifugalen Wirbel in die Kammer 3a einzuleiten. Bei der Armatur von Fig. 8 schließt der Ventilkörper 7' hierzu an seinem Kopfende mit einem Querflansch 7'a ab, dessen Unterseite mit einem geeigneten Strömungsleitprofil 26 versehen ist und durch den hindurch vom Zuflusskanal 13 in die Kammer 3a führende Strömungskanalbohrungen 27 eingebracht sind. Das Strömungsleitprofil 26 und die Strömungskanalbohrungen 27 sind so gebildet, dass das im Zuflusskanal 13 axial nach oben strömende Wasser in einen im Wesentlichen querverlaufenden, zentrifugalen Wirbel umgelenkt wird und so an der Oberseite des Ventilkörpers 7' in die Kammer 3a einströmt.

Fig. 9 zeigt eine weitere Variante der Auslaufarmatur der Fig. 2 bis 7. Bei dieser Variante ist am Anschlussblockkörper 5a ein trogförmiger Wirbelerzeugungskörper 28 angebracht, der sich mit einem oberen Querringflansch 28a radial bis annähernd zur Seitenwand der Flüssigkeitsaufnahmekammer 3a erstreckt und so die Öffnung in der Bodenwand der Kammer 3a unter Zwischenfügung eines Dichtrings fluiddicht abschließt. Der Wirbelerzeugungskörper 28 ist umfangsseitig in Trogbodennähe mit mehreren Einlassbohrungen 29 versehen, die im Wesentlichen in einer Querebene schräg, d.h. mit radialer Komponente und Umfangsrichtungskomponente, durch die Trogseitenwand hindurchführen. Auf diese Weise wird im Zuflusskanal 13 axial nach oben strömendes Wasser durch die Einlassbohrungen 29 geleitet und dadurch in eine im Wesentlichen in einer Querebene liegende Wirbelströmung umgelenkt. Diese zentrifugale Wirbelströmung pflanzt sich vom Topfboden nach oben fort, bis das Wasser aus dem Wirbelerzeugungskörper 28 austritt und als zentrifugale Wirbelströmung die Kammer 3a füllt.

Die Auslaufarmatur von Fig. 9 ist darüber hinaus mit einem direkten Abführkanal 30 versehen, der mittig entlang der Auslaufkörper-Längsachse 9 aus dem dort mit einer entsprechenden Öffnung versehenen Topfboden des Wirbelerzeugungskörpers 28 nach unten abführt und im Grundkörper 1 in einen Ablaufschlauch 31 übergeht. Da in die Kammer 3a eingeleitetes Wasser, wie vorstehend erläutert, als zentrifugaler Wirbel an der Topfseitenwand des Wirbelerzeugungskörpers 28 entlang strömt, gelangt während des Befüllvorgangs der Kammer 3a keine nennenswerte Wassermenge in den mittigen Abführkanal 30 nach unten. Sobald die Wasserzufuhr abgestellt wird, kann Wasser langsam aus der Kammer 3a über den Abführkanal 30 abgeführt werden, so dass es nicht zu lange im Auslaufkörper 3 stehen bleibt, wenn sich dieser auf dem Grundkörper 1 befindet.

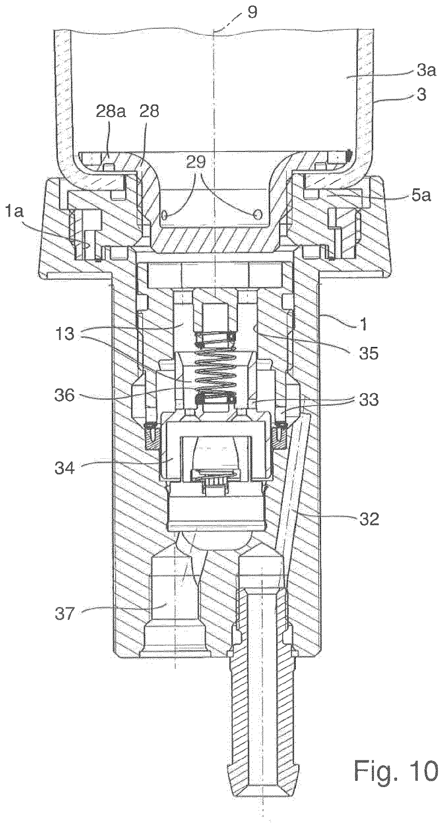

Fig. 10 zeigt eine weitere erfindungsgemäße Auslaufarmatur, wobei funktionell äquivalente Elemente wiederum mit den gleichen Bezugszeichen versehen sind wie zu den oben erläuterten Ausführungsbeispielen, auf deren Beschreibung insoweit verwiesen werden kann. Ähnlich wie in der Variante von Fig. 9 weist auch hier der Auslaufkörper 3 einen topfförmigen Wirbelerzeugungskörper 28 auf, der in einer Bodenöffnung der Kammer 3a an einem geeignet gebauten Anschlussblockkörper 5a gehalten ist. Der Wirbelerzeugungskörper 28 von Fig. 10 funktioniert in gleicher Weise wie oben zu demjenigen von Fig. 9 erläutert und weist zu diesem Zweck die erwähnten wirbelerzeugenden Strömungskanalbohrungen 29 im unteren Topfseitenwandbereich auf.

Bei der Armatur von Fig. 10 ist im Grundkörper 1 durch eine entsprechende Bohrung ein Abführkanal 32 gebildet, der über eine radiale Verbindungsöffnung 33 aus dem Zuflusskanal 13 abführt. Der Verbindungsöffnung 33 ist ein Absperrventil zugeordnet, mit dem sie flüssigkeitsdruckgesteuert selbsttätig abgesperrt und freigegeben werden kann.

Dazu weist das Absperrventil einen U-ringförmigen Ventilkörper 34 auf, der axial beweglich in einer zugehörigen Mittenbohrung 35 des Grundkörpers 1 angeordnet ist. In Fig. 10 ist der Ventilkörper 34 in seiner unteren Endstellung gezeigt, in der er die Fluidverbindung 33 des Abführkanals 32 zum Zuflusskanal 13 freigibt und aus der er gegen die Kraft einer Vorspannfeder 36 nach oben in eine obere Endstellung gedrückt werden kann, in welcher er die Verbindungsöffnung 33 zwischen Zuflusskanal 13 und Abführkanal 32 absperrt.

Wenn der Auslaufkörper 3 mit Wasser befüllt werden soll, gelangt das von der Wasserversorgung zugeführte Wasser von unten in einen Anschlusskanal 37 in den Grundkörper 1 und strömt von dort im Grundkörperabschnitt des Zuflusskanals 13 nach oben, um dann als zentrifugaler Strömungswirbel über den Topf des Wirbelerzeugungskörpers 28 in die Kammer 3a einzuströmen. Dabei wird der Ventilkörper 34 durch den Wasserdruck nach oben gedrückt und in seiner oberen Endstellung gehalten, so dass der Abführkanal 32 abgesperrt bleibt. Sobald die Wasserzufuhr gestoppt wird und der Wasserdruck nachlässt, wird der Ventilkörper 34 in seine untere Endstellung gedrückt und gibt die Verbindung 33 des Zuflusskanals 13 zum Abführkanal 32 frei. Dadurch kann in der Flüssigkeitsaufnahmekammer 3a stehendes Wasser allmählich wieder nach unten in den Zuflusskanal 13 zurücklaufen und dann über den Abführkanal 32 abgeführt werden, z.B. in einen vorhandenen Wasch-/Spültischablauf. Optional kann das Absperrventil zudem so ausgelegt sein, dass es den Zuflusskanal 13 gegenüber dem Anschlusskanal 37 absperrt, wenn Wasserdruck im Anschlusskanal 37ansteht, aber der Auslaufkörper 3 vom Grundkörper 1 abgenommen ist.

Wie die gezeigten und oben erläuterten Ausführungsbeispiele deutlich machen, stellt die Erfindung eine vorteilhafte Auslaufarmatur zur Verfügung, die einen von einem Grundkörper abnehmbaren Auslaufkörper besitzt, der als Flüssigkeitsbehälter ausgebildet ist.

Unterschiedlich gestaltete Auslaufkörper können für einen bestimmten Grundkörper verwendet werden und ein bestimmter Auslaufkörper kann auf verschiedene Grundkörper aufgesetzt werden. Es versteht sich, dass die Erfindung vielerlei Alternativen zu den gezeigten Beispielen umfasst, wie sie sich für den Fachmann ohne Weiteres durch Verwendung fachnotorischer Austauschmittel ergeben.

## Patentansprüche

1. Sanitäre Waschtisch- oder Spültisch-Auslaufarmatur zum Abgeben einer zugeführten Flüssigkeit, umfassend
- einen Grundkörper (1), der einen Anschluss zum Anschließen an eine Flüssigkeitsversorgung aufweist, und
- einen am Grundkörper (1) über eine lösbare Verbindung (2) angebrachten Auslaufkörper (3), der als Wasserauslauf der sanitären Waschtisch-oder Spültisch-Auslaufarmatur fungiert, wenn er an den Grundkörper (1) angekoppelt ist,
**dadurch gekennzeichnet, dass**
- der Grundkörper (1) Befestigungsmittel zum Befestigen an einem Waschtisch oder Spültisch aufweist,
- der Auslaufkörper (3) als vom Grundkörper (1) abnehmbarer Flüssigkeitstransportbehälter ausgebildet ist und
- die lösbare Verbindung (2) als Steckverbindung ausgeführt ist, durch die der Auslaufkörper (3) auf eine obere Stirnseite des Grundkörpers (1) aufsetzbar und wieder von diesem lösbar ist, wobei die Steckverbindung zugehörige Steckverbindungsmittel (5, 1a) an einer Unterseite des Auslaufkörpers und an der oberen Stirnseite des Grundkörpers umfasst.

2. Sanitäre Waschtisch- oder Spültisch-Auslaufarmatur nach Anspruch 1, weiter **gekennzeichnet durch** ein Verriegelungsmittel (16, 17) zum lösbaren Verriegeln der Steckverbindung.

3. Sanitäre Waschtisch- oder Spültisch-Auslaufarmatur nach Anspruch 1 oder 2, weiter **dadurch gekennzeichnet, dass** eine Fluidverbindung zur Flüssigkeitszufuhr von der Flüssigkeitsversorgung in den Auslaufkörper einen in eine Flüssigkeitsaufnahmekammer (3a) des Auslaufkörpers führenden Zuflusskanal (13) im Auslaufkörper und eine selbsttätige Abflusssperre (7a, 8a; 25a) umfasst, die den Zuflusskanal bei vom Grundkörper abgenommenem Auslaufkörper gegen ein Abfließen von Flüssigkeit aus der Flüssigkeitsaufnahmekammer absperrt und ihn bei am Grundkörper angebrachtem Auslaufkörper zur Zufuhr von Flüssigkeit in die Flüssigkeitsaufnahmekammer freigibt.

4. Sanitäre Waschtisch- oder Spültisch-Auslaufarmatur nach einem der Ansprüche 1 bis 3, weiter **dadurch gekennzeichnet, dass** eine Fluidverbindung zur Flüssigkeitszufuhr von der Flüssigkeitsversorgung in den Auslaufkörper ein am Grundkörper vorgesehenes, selbsttätiges Absperrventil (14, 15) beinhaltet, das bei am Grundkörper angebrachtem Auslaufkörper in einer Freigabeposition gehalten wird und bei vom Grundkörper abgenommenem Auslaufkörper eine Absperrposition einnimmt.

5. Sanitäre Waschtisch- oder Spültisch-Auslaufarmatur nach einem der Ansprüche 1 bis 4, weiter **dadurch gekennzeichnet, dass** eine Fluidverbindung zur Flüssigkeitszufuhr von der Flüssigkeitsversorgung in den Auslaufkörper ein Wirbelerzeugungsmittel (20; 27; 29) aufweist, um die Flüssigkeit unter Bildung eines zentrifugalen Wirbels in eine Flüssigkeitsaufnahmekammer (3a) des Auslaufkörpers einzuleiten.

6. Sanitäre Waschtisch- oder Spültisch-Auslaufarmatur nach Anspruch 5, weiter **dadurch gekennzeichnet, dass** das Wirbelerzeugungsmittel einen Strömungsleitkörper (7; 7'; 28) beinhaltet, der in einem Eintrittsbereich zur Flüssigkeitsaufnahmekammer oder einem vorgelagerten Zuflusskanal (12) angeordnet ist, wobei der Strömungsleitkörper
- mindestens eine Kammereintrittsöffnung (27; 29) mit zu einer Kammerlängsrichtung querverlaufender Hauptkomponente und/oder
- einen sich quer zu einer Kammerlängsrichtung (9) erstreckenden Strömungsleitflansch (7d; 7'a) und/oder
- mindestens einen schräg zu einer Zuflusskanallängsrichtung verlaufenden Strömungsleitschlitz (20) an einem in einen Zuflusskanal vor der Flüssigkeitsaufnahmekammer ragenden Abschnitt aufweist.

7. Sanitäre Waschtisch- oder Spültisch-Auslaufarmatur nach einem der Ansprüche 3 bis 6, weiter **gekennzeichnet durch** einen in den Zuflusskanal mündenden Luftansaugkanal (21, 22).

8. Sanitäre Waschtisch- oder Spültisch-Auslaufarmatur nach einem der Ansprüche 1 bis 7, weiter **gekennzeichnet durch** einen Abführkanal (30, 31) zum Abführen von Flüssigkeit aus einer Flüssigkeitsaufnahmekammer (3a) des Auslaufkörpers bei am Grundkörper angebrachtem Auslaufkörper, wobei der Abführkanal getrennt von einem Zuflusskanal (13) aus einem Bodenbereich der Flüssigkeitsaufnahmekammer abführt und sich in den Grundkörper erstreckt.

9. Sanitäre Waschtisch- oder Spültisch-Auslaufarmatur nach einem der Ansprüche 1 bis 8, weiter **gekennzeichnet durch** einen Abführkanal (23; 30) zum Abführen von Flüssigkeit aus einer Flüssigkeitsaufnahmekammer (3a) des Auslaufkörpers bei am Grundkörper angebrachtem Auslaufkörper, wobei der Abführkanal von einem Zuflusskanal (13) abgeht und ein Ventil (34) vorgesehen ist, das den Abführkanal gegenüber dem Zuflusskanal flüssigkeitsdruckgesteuert selbsttätig absperrt und freigibt.

## Claims

1. Sanitary washbasin or sink outlet fitting for discharging a fed liquid, comprising
- a basic body (1), which has a connection for connecting to a liquid supply, and
- an outlet body (3), which is connected via a releasable connection (2) to the basic body (1), said outlet body functioning as a water outlet of the sanitary washbasin or sink outlet fitting when being coupled to the basic body (1),
**characterized in that**
- the basic body (1) comprises fixing means for fixing at a washbasin or sink,
- the outlet body (3) is designed as a liquid container which can be removed from the basic body (1), and
- the releasable connection is formed as a plug-in connection by which the outlet body (3) is capable of being placed on a top face side of the basic body (1) and removable again therefrom, where the plug-in connection comprises corresponding plug-in connection means (5, 1a) at a bottom face side of the outlet body and at the top face side of the basic body.

2. Sanitary washbasin or sink outlet fitting according to Claim 1, further **characterized by** a locking means (16, 17) for locking the plug-in connection in a releasable manner.

3. Sanitary washbasin or sink outlet fitting according to Claim 1 or 2, further **characterized in that** a fluid connection for feeding liquid from the liquid supply into the outlet body comprises an inflow channel (13) in the outlet body, this inflow channel leading into a liquid-receiving chamber (3a) of the outlet body, and an automatic outflow barrier (7a, 8a; 25a), which shuts off the inflow channel, when the outlet body has been removed from the basic body, against liquid flowing out of the liquid-receiving chamber and releases it, when the outlet body has been fitted on the basic body, in order for liquid to be fed into the liquid-receiving chamber.

4. Sanitary washbasin or sink outlet fitting according to one of Claims 1 to 3, further **characterized in that** a fluid connection for feeding liquid from the liquid supply into the outlet body comprises an automatic shut-off valve (14, 15) which is provided on the basic body and, when the outlet body has been fitted on the basic body, is retained in a release position and, when the outlet body has been removed from the basic body, assumes a shut-off position.

5. Sanitary washbasin or sink outlet fitting according to one of Claims 1 to 4, further **characterized in that** a fluid connection for feeding liquid from the liquid supply into the outlet body has a vortexing means (20; 27; 29) in order to introduce the liquid into a liquid-receiving chamber (3a) of the outlet body with a centrifugal vortex being formed.

6. Sanitary washbasin or sink outlet fitting according to Claim 5, further **characterized in that** the vortexing means comprises a flow-directing body (7; 7'; 28) which is arranged in an entry region to the liquid-receiving chamber or in an upstream inflow channel (12), wherein the flow-directing body comprises
- at least one chamber-entry opening (27; 29) having a main component running transversely to a longitudinal chamber direction, and/or
- a flow-directing flange (7d; 7'a), which extends transversely to a longitudinal chamber direction (9), and/or
- at least one flow-directing slot (20), which runs obliquely in relation to a longitudinal inflow-channel direction, the slot being arranged at a portion extending into an inflow channel upstream of the liquid-receiving chamber.

7. Sanitary washbasin or sink outlet fitting according to one of Claims 3 to 6, further **characterized by** an air-intake channel (21, 22), which opens out into the inflow channel.

8. Sanitary washbasin or sink outlet fitting according to one of Claims 1 to 7, further **characterized by** a removal channel (30, 31) for channelling away liquid from a liquid-receiving chamber (3a) of the outlet body when the outlet body has been fitted on the basic body, wherein the removal channel channels away from a base region of the liquid-receiving chamber, separately from an inflow channel (13), and extends into the basic body.

9. Sanitary washbasin or sink outlet fitting according to one of Claims 1 to 8, further **characterized by** a removal channel (23; 30) for channelling away liquid from a liquid-receiving chamber (3a) of the outlet body when the outlet body has been fitted on the basic body, wherein the removal channel extends from an inflow channel (13) and a valve (34) is provided, this valve automatically shutting off and releasing the removal channel in relation to the inflow channel under liquid pressure control.

## Revendications

1. Robinetterie sanitaire de lavabo ou d'évier pour distribuer un liquide amenée, comprenant
- un corps de base (1) qui présente un raccord pour le raccorder à une alimentation en liquide, et
- un corps de sortie (3) monté sur le corps de base (1) par l'intermédiaire d'une liaison amovible (2) et faisant office de sortie d'eau de la robinetterie sanitaire de lavabo ou d'évier lorsqu'il est couplé au corps de base (1),
**caractérisée en ce que**
- le corps de base (1) présente des moyens de fixation pour le fixer à un lavabo ou un évier,
- le corps de sortie (3) est réalisé sous forme de récipient de transport de liquide pouvant être retiré du corps de base (1) et
- la liaison amovible (2) est réalisée sous forme de liaison par enfichage, grâce à laquelle le corps de sortie (3) peut être placé sur une face frontale supérieure du corps de base (1) et être détaché de celui-ci, la liaison par enfichage comprenant des moyens de liaison par enfichage associés (5, 1a) sur une face inférieure du corps de sortie et sur la face frontale supérieure du corps de base.

2. Robinetterie sanitaire de lavabo ou d'évier selon la revendication 1, **caractérisée en outre par** un moyen de verrouillage (16, 17) pour verrouiller de manière amovible la liaison par enfichage.

3. Robinetterie sanitaire de lavabo ou d'évier selon la revendication 1 ou 2, **caractérisée en outre en ce qu'**une communication fluidique pour amener du liquide depuis l'alimentation en liquide jusque dans le corps de sortie comprend un canal d'amenée (13) dans le corps de sortie, menant à une chambre de réception de liquide (3a) du corps de sortie, et comprend une barrière d'écoulement automatique (7a, 8a ; 25a) qui, lorsque le corps de sortie est retiré du corps de base, ferme le canal d'amenée pour empêcher le liquide de s'écouler hors de la chambre de réception de liquide et qui, lorsque le corps de sortie est monté sur le corps de base, le libère pour amener du liquide jusque dans la chambre de réception de liquide.

4. Robinetterie sanitaire de lavabo ou d'évier selon l'une des revendications 1 à 3,
**caractérisée en outre en ce qu'**une communication fluidique pour amener du liquide depuis l'alimentation en liquide jusque dans le corps de sortie comprend une vanne d'arrêt automatique (14, 15) prévue sur le corps de base, qui est maintenue dans une position de libération lorsque le corps de sortie est monté sur le corps de base et qui prend une position d'arrêt lorsque le corps de sortie est retiré du corps de base.

5. Robinetterie sanitaire de lavabo ou d'évier selon l'une des revendications 1 à 4,
**caractérisée en outre en ce qu'**une communication fluidique pour amener du liquide depuis l'alimentation en liquide jusque dans le corps de sortie comprend un moyen générateur de tourbillon (20 ; 27 ; 29) pour introduire le liquide dans une chambre de réception de liquide (3a) du corps de sortie en formant un tourbillon centrifuge.

6. Robinetterie sanitaire de lavabo ou d'évier selon la revendication 5,
**caractérisée en outre en ce que** le moyen générateur de tourbillon contient un corps de guidage d'écoulement (7 ; 7' ; 28) qui est disposé dans une zone d'entrée vers la chambre de réception de liquide ou dans un canal d'amenée (12) placé en amont, le corps de guidage d'écoulement comprenant
- au moins une ouverture d'entrée de chambre (27 ; 29) avec une composante principale s'étendant transversalement par rapport à une direction longitudinale de la chambre, et/ou
- une bride de guidage d'écoulement (7d ; 7'a) s'étendant transversalement par rapport à une direction longitudinale (9) de la chambre, et/ou
- au moins une fente de guidage d'écoulement (20), s'étendant en oblique par rapport à une direction longitudinale du canal d'amenée, sur un tronçon faisant saillie dans un canal d'amenée en avant de la chambre de réception de liquide.

7. Robinetterie sanitaire de lavabo ou d'évier selon l'une des revendications 3 à 6,
**caractérisée en outre par** un canal d'aspiration d'air (21, 22) débouchant dans le canal d'amenée.

8. Robinetterie sanitaire de lavabo ou d'évier selon l'une des revendications 1 à 7,
**caractérisée en outre par** un canal d'évacuation (30, 31) pour évacuer du liquide hors d'une chambre de réception de liquide (3a) du corps de sortie lorsque le corps de sortie est monté sur le corps de base, le canal d'évacuation menant hors d'une zone de fond de la chambre de réception de liquide séparément d'un canal d'amenée (13) et s'étendant jusque dans le corps de base.

9. Robinetterie sanitaire de lavabo ou d'évier selon l'une des revendications 1 à 8,
**caractérisée en outre par** un canal d'évacuation (23 ; 30) pour évacuer du liquide hors d'une chambre de réception de liquide (3a) du corps de sortie lorsque le corps de sortie est monté sur le corps de base, le canal d'évacuation partant d'un canal d'amenée (13), et une vanne (34) étant prévue, qui ferme et libère automatiquement le canal d'évacuation par rapport au canal d'amenée en étant commandée par la pression du liquide.
